# FASCICULE DE BREVET EUROPEEN

(11) **EP 2 252 186 B1**
(45) Date de publication et mention de la délivrance du brevet: **02.11.2011**
(21) Numéro de dépôt: 09719720.6
(22) Date de dépôt: 03.02.2009
(51) Int. Cl.: A47J 43/12, A47J 47/16, B67D 1/04

(54) **APPAREIL DE CUISINE DU GENRE SIPHON À CRÈME CHANTILLY AVEC SUPPORT DE RANGEMENT**
SCHLAGSAHNESPENDERARTIGES KOCHGERÄT MIT AUFBEWAHRUNGSHALTER
WHIPPED-CREAM DISPENSER TYPE COOKING APPARATUS WITH STORAGE HOLDER

(30) Priorité: 07.02.2008 FR 0800652
(43) Date de publication de la demande: 24.11.2010
(73) Titulaire: Mastrad, 75012 Paris (FR)
(72) Inventeur: LION, Mathieu, F-75012 Paris (FR)
(74) Mandataire: Plaçais, Jean Yves
(86) Numéro de dépôt international: PCT/FR2009/000121
(87) Numéro de publication internationale: WO 2009/112706

(56) Documents cités:
- EP-A- 0 163 007
- EP-A- 0 291 788
- EP-A- 1 428 791
- CH-A- 370 372
- FR-A- 2 385 962
- US-A- 5 031 799

## Description

L'invention se rapporte aux ustensiles de cuisine et plus précisément à un appareil de cuisine du genre siphon à crème Chantilly.

Les ustensiles de cuisine sont de manière générale très divers et de nature variable. Parmi ces ustensiles, on trouve les siphons. Les siphons sont généralement conçus pour élaborer des mousses à base de légumes, de fruits ou à partir de produits laitiers. Un siphon peut être adapté pour des préparations chaudes, pour des préparations froides ou les deux. Parmi les préparations froides on trouve notamment les préparations de Chantilly.

D'une manière générale, les siphons sont principalement usinés en acier inoxydable ou aluminium avec pièces métalliques ou synthétiques, résistant au lave-vaisselle. Classiquement, un siphon comprend un moins un réservoir à fluide, une tête, un embout et une ou plusieurs cartouches à gaz. Un siphon comprend un système d'aspiration par tube permettant un prélèvement facile du contenu à l'intérieur du réservoir à fluide. Un prélèvement facile est assuré par un élément du type bouton pression, qui peut favorablement être activé par une seule main.

Le document EP 1 428 791 décrit un capuchon approprié pour couvrir une tête de siphon, ledit capuchon logeant un tube de mise en forme en tant qu'embout, et une unité de manipulation en tant qu'organe de commande du déclencheur pour la valve, l'élément de tête étant pourvu d'une unité de perforation de cartouche.

Après usage, un siphon doit être abondamment rincé à l'eau afin d'éliminer tout résidu alimentaire. Après lavage, le siphon doit être rigoureusement séché avant de pouvoir être stocké à un endroit approprié, tel qu'un meuble de type placard.

L'ensemble des étapes lavage-séchage avant le stockage, est essentiel pour éviter une prolifération de bactéries à l'intérieur du siphon.

L'invention vient améliorer la situation.

À cet effet, l'invention vient introduire un appareil de cuisine du genre siphon à crème chantilly, comprenant un réservoir à fluide, une tête, un embout, et au moins une cartouche à gaz. L'appareil selon l'invention comprend un support de rangement, avec une embase dans laquelle sont définis :
- au moins un logement en creux agencé pour recevoir ledit embout, et ledit réservoir à fluide, en situation d'aération de ces deux éléments,
- une butée pour positionner ladite tête, également en situation d'aération, et
- au moins un alvéole propre à loger une cartouche de gaz.

Selon un mode de réalisation l'embase de l'appareil comprend d'une part une structure support, sur laquelle se trouve ledit logement en creux et ladite butée, et d'autre part une structure de recouvrement sur laquelle se trouvent le ou les alvéoles. La structure support et la structure de recouvrement peuvent être connectables entres-elles par des moyens appropriés.

Selon un autre mode de réalisation la structure support présente un soubassement essentiellement en forme de goutte avec d'une part un corps sur lequel est positionné de manière sensiblement centré ledit logement en creux, et d'autre part un appendice sur lequel est définie ladite butée. Selon ce mode de réalisation la structure de recouvrement présente une forme essentiellement tronconique agencée pour sensiblement s'arranger sur le pourtour dudit corps de façon à ce que quant la structure support et la structure de recouvrement sont en état de connexion, les deux structures sont ménagées pour conjointement former une zone de péninsule, décrite par une partie au moins dudit appendice.

La structure de recouvrement peut être biseautée en escargot et décrire par son pourtour intérieur un logement tronconique agencé pour stabiliser un réservoir à fluide d'un siphon lorsque celui-ci est reçu sur le logement en creux. La structure de recouvrement forme donc sur son plateau supérieur un biseau en hélice. Le logement en creux peut être un pilier tubulaire lequel reçoit sur son coté intérieur un embout de siphon, et sur son coté extérieur ledit réservoir. La réception ne se fait pas nécessairement par correspondance de formes. Le logement en creux peut en outre être agencé pour recevoir un élément du type écouvillon ou goupillon.

Selon un mode de réalisation l'embase comprend une pluralité d'alvéoles disposés en barillet. Les alvéoles peuvent alors être définies sur la structure de recouvrement et former un aspect d'escalier en colimaçon. Un alvéole peut être agencé pour loger en outre un protège capsule formé en polypropylène.

Selon un mode de réalisation l'embase est réalisé en matière comprenant des agents antimicrobiens du type à base d'ions d'argent et ainsi défavoriser une prolifération bactérienne. Selon un autre mode de réalisation l'embase peut être réalisée en matière souple du type thermoplastique renforcé (TPR). De plus, l'embase peut comprendre des trous traversant pour favoriser la situation d'aération.

D'autres avantages et caractéristiques de l'invention apparaîtront à la lecture de la description détaillée ci-après et sur les dessins annexés sur lesquels :
- la figure 1 est relative à l'invention et montre une vue de face d'une structure support,
- la figure 2 montre une vue latérale de la structure support,
- la figure 3 montre une vue de dessus de la structure de support,
- la figure 4 montre une coupe transversale de la structure support selon l'axe A-A de la figure 1,
- la figure 5 est relative à l'invention et montre une vue de face d'une structure de recouvrement,
- la figure 6 montre une vue latérale de la structure de recouvrement,
- la figure 7 montre une vue de dessus de la structure de recouvrement,
- la figure 8 montre une coupe transversale de la structure de recouvrement selon l'axe A-A de la figure 6,
- la figure 9 montre une vue en perspective de l'embase comprenant certaines pièces d'un siphon
- la figure 10 montre un siphon en perspective éclatée, et
- la figure 11 montre une vanne d'injection pour siphon.

Les dessins et la description ci-après contiennent, pour l'essentiel, des éléments de caractère certain. Les dessins représentent, pour partie au moins, des aspects difficiles à décrire autrement que par le dessin. Ils font partie intégrante de la description, et pourront donc non seulement servir à mieux faire comprendre la présente invention, mais aussi contribuer à sa définition, le cas échéant.

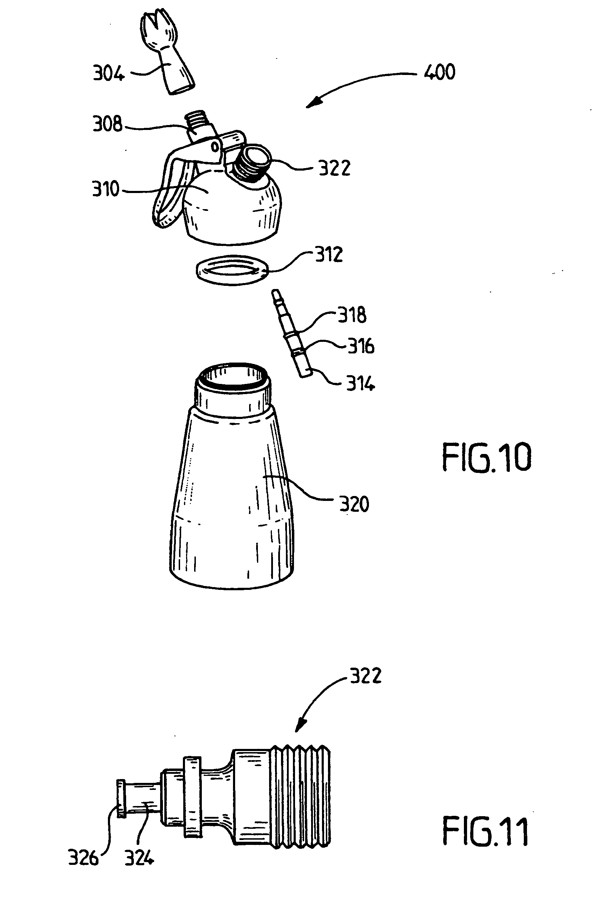

On revient maintenant plus en détail sur les appareils de cuisine du genre siphon à chantilly. Un siphon est un objet composé de plusieurs pièces. La figure 10 montre en perspective éclatée des pièces que peut comprendre un siphon 400. On distingue tout d'abord un réservoir à fluide 320, une tête 310, un embout 304, un moyen de connexion dudit embout 304 sur ladite tête 310 notamment une douille pour embout 308. On distingue ensuite un joint d'étanchéité 312 qui vient se placer entre le réservoir à fluide 320 et la tête 310, et un piston 314 avec une surface d'appui 316 et un joint torique 318. La tête 310 est reliée à une vanne d'injection 322 laquelle est représentée sur la figure 11. La vanne d'injection 322 comprend un clapet 326 et un joint d'étanchéité 324. La vanne 322 est prévue pour être chargée par des cartouches à gaz 302 pour régulation de pression (cartouches non représentés sur la figure 11). D'autre éléments peuvent s'ajouter à ces pièces tels que des protège capsules, un écouvillon ou des égouttoirs.

L'utilisation d'un siphon nécessite l'agencement des pièces entre elles, qui seront alors mises en contact avec des produits alimentaires en vue de créer des mousses. Ce contact au produit alimentaire est source de prolifération bactérienne sur le siphon lorsque celui-ci n'est pas correctement lavé et séché avant d'être rangé/stocké à un endroit approprié.

Classiquement, le stockage du siphon, et plus précisément des pièces distinctes est généralement désordonné au sein d'un boîtier. Dans ce boîtier, les pièces sont en contact les unes avec les autres. Les zones de contact créent des surfaces en situation d'anaérobie source de prolifération bactérienne.

L'appareil de cuisine de l'invention propose un support de rangement permettant de regrouper toutes les pièces du siphon en un seul endroit. Les pièces se retrouvent désormais en situation de stockage ordonné. Le support de rangement est en outre conçu pour permettre un séchage effectif de toutes les pièces du siphon après son utilisation et son lavage. Pour cela, chaque pièce de l'appareil de cuisine de l'invention est sensiblement stockée en situation d'aération.

Par situation d'aération, on entend la libre circulation de l'air sur au moins une partie des différentes pièces ou éléments du siphon. Le support de rangement est avantageusement parsemé d'une multitude de trous traversant pour favoriser cette circulation et ainsi de crée un environnement du type aérobie de l'appareil. L'environnement du type aérobie permet des conditions défavorables à la prolifération de bactéries.

L'invention a donc un double effet. D'une part l'invention permet de regrouper tous les éléments-pièces d'un siphon afin de permettre un stockage ordonné et ainsi d'éviter des pertes de pièces, et d'autre part, l'invention permet au moyen du support de rangement d'effectuer un stockage en situation d'aération.

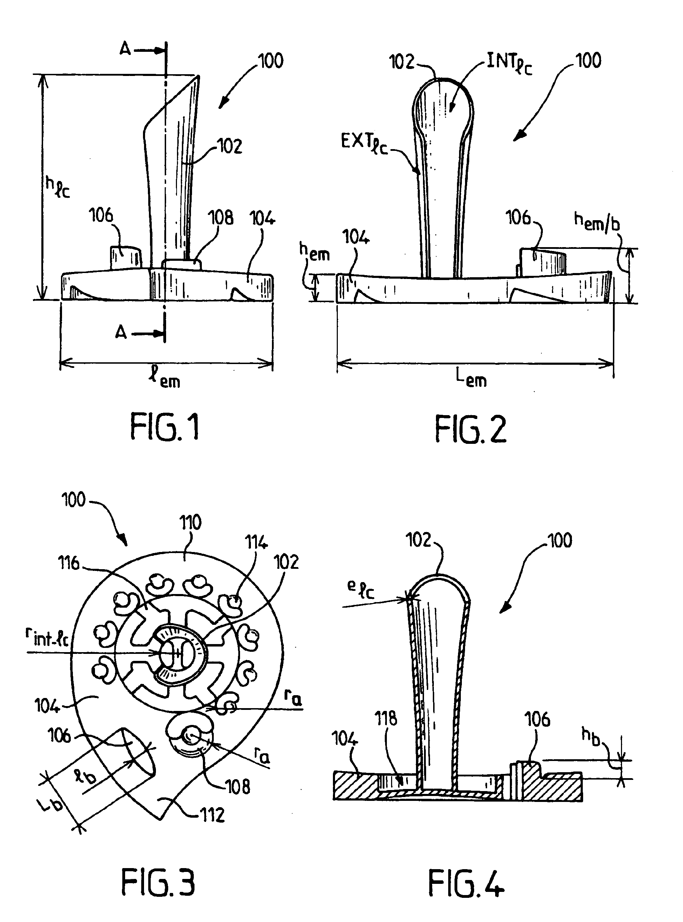

La figure 1 montre, une structure support 100, selon un mode de réalisation de l'invention. La structure support 100 comprend un logement en creux 102 réalisé en pilier tubulaire. D'une manière générale, le logement en creux 102 est essentiellement tronconique avec un rayon intérieur r_{int-lc} d'environ 5mm à son extrémité inférieure et d'environ 15mm à son extrémité supérieure. La hauteur du logement en creux 102 h_{lc} est comprise entre environ 100mm et 150mm. Selon le mode de réalisation de la figure 1, le logement en creux 102 est biseauté sur son extrémité supérieure.
La figure 2 montre une vue latérale de la structure support 100, sur laquelle on distingue un côté intérieur INT_{lc} et un côté extérieur EXT_{lc} du logement en creux 102.
La figure 4 montre une coupe transversale de la structure support 100 selon l'axe A-A. Selon le mode de réalisation décrit, le logement en creux 102 est conformé par une paroi d'épaisseur e_{lc} comprise entre environ 1mm et 3mm.

D'une manière générale, le logement en creux 102 est conformé pour assurer une bonne aération des pièces qu'il reçoit.

La figure 1 montre un soubassement 104 sur l'extrémité inférieure de la structure de support 100. Le soubassement 104 est essentiellement en forme de goutte comme le montre la figure 3 par une vue de dessus de la structure de support 100.

La goutte est formée d'un corps 110 et d'un appendice 112. Le logement en creux 102 est situé sensiblement au centre du corps 110.

La figure 3 montre également, sur le fond de la structure support 100, des trous traversant 116 de formes diverses, qui défmissent ensemble un motif choisi, lequel peut être partiellement d'ordre esthétique, tout en permettant une bonne aération, et le maintien des pièces, là où c'est nécessaire. A cet égard, la figure 3 constitue la définition d'un exemple de forme que peuvent prendre lesdits trous traversant 116.

Sur la figure 3, on distingue plusieurs découpes ou échancrures 114 prévues pour recevoir et stabiliser des cartouches 302. Selon le mode représenté, les découpes ont un rayon rₐ sensiblement identique aux rayons des alvéoles 204. Toutefois, découpes ou échancrures 114 peuvent être de formes diverses, qui définissent ensemble un motif choisi, lequel peut être partiellement d'ordre esthétique, tout en permettant une bonne aération, et le maintien des pièces et notamment des alvéoles, là où c'est nécessaire. A cet égard, la figure 3 constitue la définition d'un exemple de forme que peuvent prendre lesdites découpes ou échancrures 114 Le soubassement 104 s'inscrit, selon le mode de réalisation décrit dans un parallélépipède d'une longueur Lₑₘ comprise entre environ 150mm et 160mm, d'une largeur lₑₘ comprise entre environ 110mm et 120mm et d'une hauteur hₑₘ comprise entre environ 10mm et 20mm. Le corps 110 présente au moins une partie circulaire de rayon rₑₘ compris entre environ 55mm et 60mm. Le soubassement 104 peut présenter un évidement circulaire 118 centré sur le corps 110 et encerclant le logement en creux 102 sur son extrémité inférieure. Cet évidement circulaire 118 est prévu pour recevoir un rebord d'un réservoir à fluide 320 d'un siphon 400 (détaillé plus loin).

Sur les figures 1 à 4, on distingue une butée 106 au niveau de l'appendice 112 du soubassement 104. Selon le mode de réalisation décrit, la butée 106 est de forme essentiellement ovoïde inclinée de longueur L_{b} comprise entre environ 25mm et 35mm et est préférentiellement d'environ 30mm, de largeur l_{b} comprise entre environ 5mm et 10mm et préférentiellement comprise entre 8mm et 9mm, et de hauteur h_{b} comprise entre environ 12mm et 16mm. Cette butée 106 est prévue pour positionner une tête 310 de siphon 400.

Les figures 1 et 3 montrent également un moyen de centrage 108 qui permet le positionnement d'une structure de recouvrement 200 sur la structure support 100.

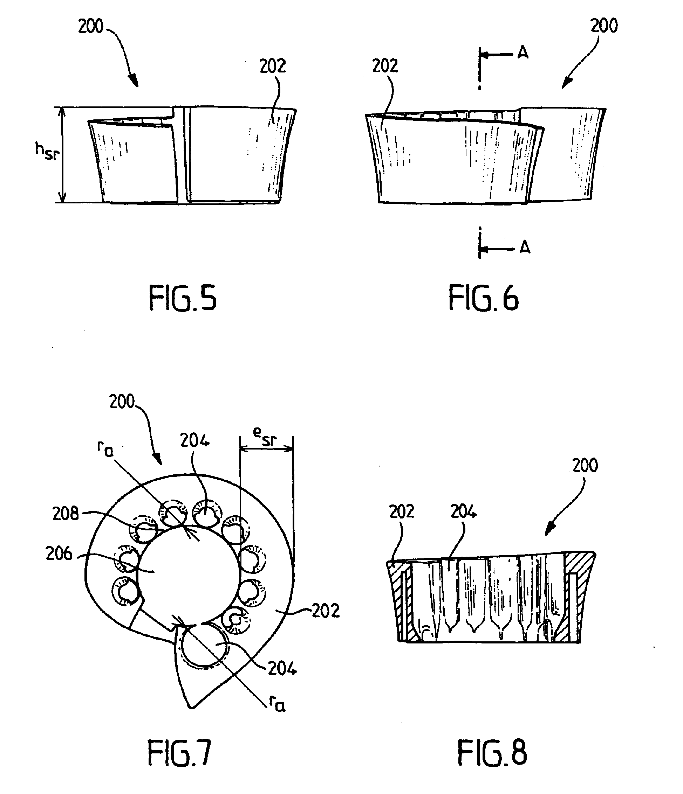

Les figures 5 à 8 sont relatives à la structure de recouvrement 200. L'ensemble structure support 100 et structure de recouvrement 200 forment l'embase du support de rangement de l'appareil de cuisine de l'invention.

Le moyen de centrage 108 permet d'ajuster une connexion entre la structure support 100 et la structure de recouvrement 200. Lorsque les deux structures sont en état de connexion, elles sont ménagées pour conjointement former une zone de péninsule, décrite par une partie au moins de l'appendice 112. Les figures 5 à 7 montrent la structure de recouvrement 200 qui présente une forme essentiellement tronconique et agencée pour sensiblement s'arranger sur le pourtour périphérique du corps 110 du soubassement 104. La structure de recouvrement 200 s'inscrit au moins en partie dans un cône de hauteur hₛᵣ compris entre environ 50mm et 70mm, et forme au moins en partie un anneau d'épaisseur eₛᵣ choisi pour comprendre des alvéoles 204 de rayons rₐ compris entre 8mm et 15mm.

La figure 7 montre la structure de recouvrement 200 en forme d'anneau 202. L'anneau 202 comprend plusieurs alvéoles 204 propres à loger des cartouches de gaz du type cartouches à dioxyde de carbone (C0₂). Les alvéoles 204 peuvent selon un mode de réalisation, être disposés en barillet. Cette disposition en barillet est représentée d'une part sur la figure 7 qui montre une vue de dessus de la structure de recouvrement 200, et d'autre part sur la figure 8 qui montre une coupe transversale de cette même structure selon l'axe A-A de la figure 6. La profondeur des alvéoles 204 est sensiblement choisie pour recevoir des cartouches à gaz du siphon de l'invention et est d'environ 60mm à 65mm.

Selon un mode de réalisation, et comme représenté sur la figure 7, un alvéole 204 est agencé pour loger en outre un protège capsule.

L'anneau 202 de la structure de recouvrement 200 et selon le mode de réalisation décrit ici, est biseauté en escargot et décrit par son pourtour intérieur 208 un logement essentiellement tronconique 206 agencé pour stabiliser le réservoir à fluide 320 lorsque celui-ci est reçu par le logement en creux 104 d'une part, et par l'évidemment circulaire d'autre part. Le logement en creux 104 est de rayon r_{lc} variable compris entre environ 30mm et 45mm. Remarquons que le logement 206 peut prendre différents formes selon l'aspect de la structure de recouvrement 200. Ainsi logement 206 peut se présenter sous forme conique ou rectangulaire par exemple. Toutefois, le logement 206 est avantageusement adapté pour stabiliser et recevoir le réservoir à fluide d'un siphon choisi pour l'appareil de cuisine. Notons que le réservoir à fluide est disposé tête bêche sur l'embase.

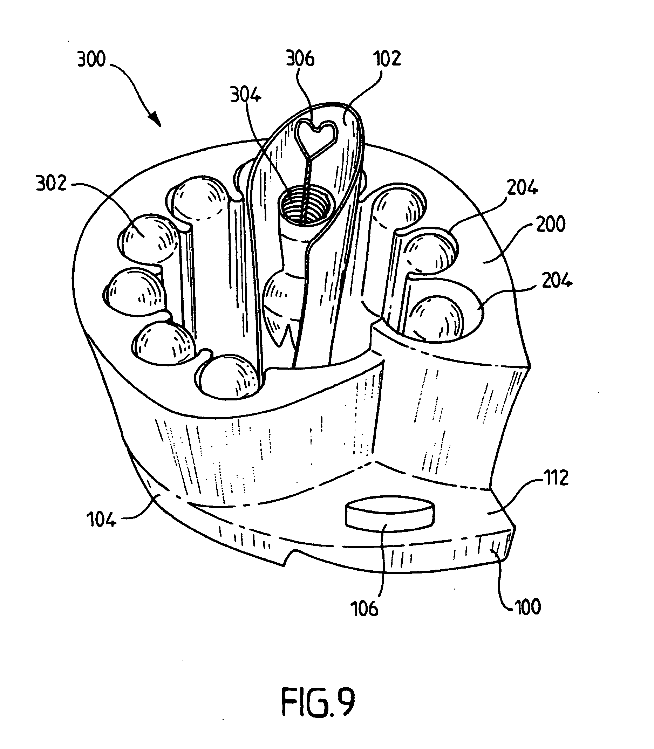

La figure 9 montre la structure support 100 et la structure de recouvrement 200 en état de connexion et forment ensemble une embase 300. Cette figure montre des cartouches 302 lorsqu'elles sont reçues dans les alvéoles 204 et stabilisées par les découpes 114. Un embout 304 et un écouvillon 306 d'un siphon de l'appareil de cuisine de l'invention, sont reçus dans le logement en creux 102. On note que le moyen de centrage 108 (non représenté sur la figure 9) permet également de former un moyen de fixation/indexation d'un protège capsule sur l'embase 300.

La structure support 100 et la structure de recouvrement 200 peuvent être assemblés de manière réversible ou irréversible pour former l'embase 300. Un assemblage réversible permet un désassemblage de l'embase 300 et ainsi un nettoyage facilité de La structure support 100 et la structure de recouvrement 200. Pour un assemblage irréversible on peut utiliser des procédés de collage ou de soudage pour connecter la structure support 100 avec la structure de recouvrement 200. Comme mentionné plus haut le matériau de fabrication est composé selon un mode de réalisation d'un matériau plastique comprenant un additif anti-microbien à base d'argent. La structure de recouvrement 200 est de préférence en matière plastique souple du type thermoplastique renforcé (TPR) ou silicone. Cela permet une certaine liberté d'adaptation pour recevoir les différentes pièces d'un siphon 400. La structure support 100 est de préférence en matière plastique rigide du type polyoléfines (polypropylène, polyéthylène notamment) pour des raisons de stabilité de l'embase 300.

## Revendications

1. Appareil de cuisine du genre siphon (400) à crème Chantilly, comprenant un réservoir à fluide (320), une tête (310), un embout (304), et au moins une cartouches à gaz (302), **caractérisé en ce que** ledit appareil comprend un support de rangement, avec une embase (300) dans laquelle sont définis :
- au moins un logement en creux (102) agencé pour recevoir ledit embout (304), et ledit réservoir à fluide (320), en situation d'aération de ces deux éléments,
- une butée (106) pour positionner ladite tête (310), également en situation d'aération, et
- au moins un alvéole (204) propre à loger une cartouche de gaz (302).

2. Appareil selon la revendication 1, **caractérisé en ce que** l'embase (300) comprend :
- une structure support (100), sur laquelle se trouve ledit logement en creux (102) et ladite butée (106), et
- une structure de recouvrement (200) sur laquelle se trouvent le ou les alvéoles (204),
ladite structure support et (100) ladite structure de recouvrement (200) étant connectables entres-elles.

3. Appareil selon la revendication 2, **caractérisé en ce que** :
- la structure support (100) présente un soubassement (104) essentiellement en forme de goutte avec d'une part un corps (110) sur lequel est positionné de manière sensiblement centré ledit logement en creux (102), et d'autre part un appendice (112) sur lequel est définie ladite butée (106),
- la structure de recouvrement (200) présente une forme essentiellement tronconique agencée pour sensiblement s'arranger sur le pourtour dudit corps (110),
et **en ce que** lorsque ladite structure support (100) et ladite structure de recouvrement (200) sont en état de connexion, elles sont ménagées pour conjointement former une zone de péninsule, décrite par une partie au moins dudit appendice (112).

4. Appareil selon la revendication 3, **caractérisé en ce que** la structure de recouvrement (200) est biseautée en escargot et décrit par son pourtour intérieur un logement tronconique agencé pour stabiliser ledit réservoir à fluide lorsque celui-ci est reçu sur ledit logement en creux (102).

5. Appareil selon une des revendications précédentes, **caractérisé en ce que** le logement en creux (102) est un pilier tubulaire lequel reçoit sur son coté intérieur ledit embout (304), et sur son coté extérieur ledit réservoir (320).

6. Appareil selon une des revendications précédentes, **caractérisé en ce que** le logement en creux (102) est en outre agencé pour recevoir un écouvillon (306).

7. Appareil selon une des revendications précédentes, **caractérisé en ce que** l'embase comprend une pluralité d'alvéoles (204) disposés en barillet.

8. Appareil selon une des revendications précédentes, **caractérisé en ce qu'**un alvéole (204) est agencé pour loger en outre un protège capsule.

9. Appareil selon une des revendications précédentes, **caractérisé en ce que** l'embase (300) est réalisée en matière comprenant des agents antimicrobiens du type à base d'ions d'argent.

10. Appareil selon l'une des revendications 1 à 9, **caractérisé en ce que** l'embase (300) est réalisée en au moins une matière choisie dans le groupe suivant: matières du type thermoplastique renforcé (TPR), matières du type silicone, et matières du type polyoléfine.

11. Appareil selon une des revendications 2 à 10, **caractérisé en ce que** l'embase (300) présente essentiellement sur la structure support (100), des trous traversant (116) pour favoriser ladite situation d'aération.

12. Appareil selon une des revendications 4 à 11, **caractérisé en ce que** :
- le soubassement (104) s'inscrit dans un parallélépipède d'une longueur (Lₑₘ) comprise entre environ 150mm et 160mm, d'une largeur (lₑₘ) comprise entre environ 110mm et 120mm et d'une hauteur (hₑₘ) comprise entre environ 10mm et 20mm, et présente sur ledit corps (110) au moins une partie circulaire de rayon (rₑₘ) compris entre environ 55mm et 60mm,
- le logement en creux (102) est essentiellement tronconique avec un rayon intérieur (rᵢₙₜ₋ₗₑ) variable compris entre environ 5mm et 15mm et de hauteur (h_{lc}) comprise entre environ 100mm et 150mm, et formé d'une paroi d'épaisseur (e_{lc}) comprise entre environ 1mm et 3mm,
- la structure de recouvrement (200) s'inscrit au moins en partie dans un cône de hauteur (hₛᵣ) comprise entre environ 50mm et 70mm, et forme au moins en partie un anneau d'épaisseur (eₛᵣ) choisie pour comprendre le ou les alvéoles de rayon (rₐ) compris entre 8mm et 15mm,
- le logement tronconique présente un rayon (rᵤ) variable compris entre environ 30mm et 45mm, et
- ladite butée (106) est de forme essentiellement ovoïde de longueur (L_{b}) d'environ 30 mm, de largeur (l_{b}) comprise environ 8mm et 9mm, et de hauteur (h_{b}) comprise entre environ 12 et 16mm.

## Claims

1. Kitchen apparatus of the whipped-cream dispenser (400) type comprising a fluid tank (320), a head (310), an end-piece (304) and at least one gas cartridge (302),
**characterized in that** said apparatus comprises a storage holder with a base (300) in which there are defined:
- at least one concave housing (102) designed to receive said end-piece (304) and said fluid tank (320), in a situation of ventilation of these two elements,
- a stop (106) for positioning said head (310), also in a situation of ventilation, and
- at least one cell (204) capable of housing a gas cartridge (302).

2. Apparatus according to claim 1, **characterised in that** the base (300) comprises:
- a support structure (100) on which said concave housing (102) and said stop (106) are located, and
- a covering structure (200) on which the cell(s) (204) is/are located,
said support structure (100) and said covering structure (200) being connectable to one another.

3. Apparatus according to claim 2, **characterised in that**:
- the support structure (100) has a substantially drop-shaped understructure (104) having on the one hand a body (110) on which there is positioned, substantially centrally, said concave housing (102), and on the other hand an appendage (112) on which said stop (106) is defined,
- the covering structure (200) has a substantially tapered shape designed to sit substantially on the periphery of said body (110),
and **in that**, when said support structure (100) and said covering structure (200) are in the connected state, they are provided to form conjointly a peninsula zone, described by at least part of said appendage (112).

4. Apparatus according to claim 3, **characterised in that** the covering structure (200) is bevelled in the shape of a snail and describes by its inner periphery a tapered housing designed to stabilise said fluid tank when it is received on said concave housing (102).

5. Apparatus according to any one of the preceding claims, **characterised in that** the concave housing (102) is a tubular pillar which receives on its inner side said end-piece (304) and on its outer side said tank (320).

6. Apparatus according to any one of the preceding claims, **characterised in that** the concave housing (102) is further designed to receive a mop (306).

7. Apparatus according to any one of the preceding claims, **characterised in that** the base (300) comprises a plurality of cells (204) arranged in the manner of a revolver cylinder.

8. Apparatus according to any one of the preceding claims, **characterised in that** one cell (204) is designed to further house a capsule protector.

9. Apparatus according to any one of the preceding claims, **characterised in that** the base (300) is made of a material comprising antimicrobial agents of the type based on silver ions.

10. Apparatus according to any one of claims 1 to 9, **characterised in that** the base (300) is made of at least one material selected from the following group: materials of the reinforced thermoplastic (RTP) type, materials of the silicone type, and materials of the polyolefin type.

11. Apparatus according to any one of claims 2 to 10, **characterised in that** the base (300) has, substantially on the support structure (100), through-holes (116) to aid said situation of ventilation.

12. Apparatus according to any one of claims 4 to 11, **characterised in that**:
- the understructure (104) is described by a parallelepiped having a length (Lₑₘ) of approximately from 150 mm to 160 mm, a width (lₑₘ) of approximately from 110 mm to 120 mm and a height (hₑₘ) of approximately from 10 mm to 20 mm and has on said body (110) at least one circular portion having a radius (rₑₘ) of approximately from 55 mm to 60 mm,
- the concave housing (102) is substantially tapered with a variable inside radius (r_{int-lc}) of approximately from 5 mm to 15 mm and a height (h_{lc}) of approximately from 100 mm to 150 mm and formed by a wall having a thickness (e_{lc}) of approximately from 1 mm to 3 mm,
- the covering structure (200) is described at least partly by a cone having a height (hₛᵣ) of approximately from 50 mm to 70 mm and forms at least partly a ring having a thickness (eₛᵣ) selected to include the cell(s) having a radius (rₐ) of from 8 mm to 15 mm,
- the tapered housing has a variable radius (r_{lc}) of approximately from 30 mm to 45 mm, and
- said stop (106) is substantially ovoid in shape having a length (L_{b}) of approximately 30 mm, a width (l_{b}) of approximately from 8 mm to 9 mm and a height (h_{b}) of approximately from 12 mm to 16 mm.

## Patentansprüche

1. Küchengerät von der Art eines Schlagsahnespenders (400), mit einem Flüssigkeitsbehälter (320), einem Kopf (310), einem Endstück (304) und wenigstens einer Gaskartusche (302),
**dadurch gekennzeichnet, dass** das Gerät einen Aufräumträger aufweist, mit einem Sockel (300), in dem definiert sind:
- wenigstens eine hohle Aufnahme (102), die ausgebildet ist, um das Endstück (304) und den Flüssigkeitsbehälter (320) in Belüftungsposition dieser beiden Elemente aufzunehmen,
- ein Anschlag (106), um den Kopf (310) ebenfalls in Belüftungsposition zu positionieren, und
- wenigstens eine Zelle (204), die in der Lage ist, eine Gaskartusche (302) aufzunehmen.

2. Gerät nach Anspruch 1, **dadurch gekennzeichnet, dass** der Sockel (300) aufweist:
- eine Stützstruktur (100), auf der sich die hohle Aufnahme (102) und der Anschlag (106) befinden, und
- eine Abdeckungsstruktur (200), auf der sich die Zelle oder die Zellen (204) befinden,
wobei die Stützstruktur (100) und die Abdeckungsstruktur (200) miteinander verbindbar sind.

3. Vorrichtung nach Anspruch 2, **dadurch gekennzeichnet, dass**
- die Stützstruktur (100) einen Unterbau (104) aufweist, der im Wesentlichen in Form eines Tropfens ausgebildet ist, mit einerseits einem Körper (110), auf dem auf im Wesentlichen zentrierte Weise die hohle Aufnahme (102) positioniert ist und andererseits einem Fortsatz (112), auf dem sich der Anschlag (106) befindet,
- wobei die Abdeckungsstruktur (200) eine im Wesentlichen kegelstumpfförmige Form aufweist, die so angeordnet ist, dass sie sich im Wesentlichen über den Umfang des Körpers (110) erstreckt,
und dass, wenn sich die Stützstruktur (100) und die Abdeckungsstruktur (200) in Verbindungsstellung befinden, sie so ausgebildet sind, dass sie gemeinsam eine Halbinselzone bilden, beschrieben durch wenigstens einen Teil des Fortsatzes (112).

4. Gerät nach Anspruch 3, **dadurch gekennzeichnet, dass** die Abdeckungsstruktur (200) schneckenförmig angeordnet ist, und durch seinen inneren Umfang eine Kegelstumpfaufnahme beschreibt, die ausgebildet ist, den Flüssigkeitsbehälter zu stabilisieren, wenn dieser in der hohlen Aufnahme (102) aufgenommen ist.

5. Gerät nach einem der vorhergehenden Ansprüche, **dadurch gekennzeichnet, dass** die hohle Aufnahme (102) eine rohrförmige Säule ist, die auf ihrer Innenseite das Endstück (304) und auf ihrer Außenseite den Behälter (320) aufnimmt.

6. Gerät nach einem der vorhergehenden Ansprüche, **dadurch gekennzeichnet, dass** die hohle Aufnahme (102) darüber hinaus ausgebildet ist, eine Flaschenbürste (306) aufzunehmen.

7. Gerät nach einem der vorhergehenden Ansprüche, **dadurch gekennzeichnet, dass** der Sockel eine Mehrzahl von Zellen (204) aufweist, die zylinderförmig angeordnet sind.

8. Gerät nach einem der vorhergehenden Ansprüche, **dadurch gekennzeichnet, dass** eine Zelle (204) ausgebildet ist, darüber hinaus eine Abdeckkapsel aufzunehmen.

9. Gerät nach einem der vorhergehenden Ansprüche, **dadurch gekennzeichnet, dass** der Sockel (300) aus einem Material gebildet ist, das antimikrobielle Zuschlagsstoffe vom Typ auf der Basis von Silberionen aufweist.

10. Gerät nach einem der Ansprüche 1 bis 9, **dadurch gekennzeichnet, dass** der Sockel (300) wenigstens aus einem Material gebildet ist, das aus der folgenden Gruppe gewählt ist: Materialien vom Typ verstärktes Thermoplast (TPR), Materialien vom Typ Silikon und Materialien vom Typ Polyolefin.

11. Gerät nach einem der Ansprüche 2 bis 10, **dadurch gekennzeichnet, dass** der Sockel (300) im Wesentlichen auf der Stützstruktur (100) Durchgangslöcher (116) aufweist, um die Belüftungssituation zu unterstützen.

12. Gerät nach einem der Ansprüche 4 bis 11, **dadurch gekennzeichnet, dass**:
- der Unterbau (104) in ein Parallelepiped von einer Länge (Lₑₘ) von zwischen ungefähr 150 mm und 160 mm, einer Breite (lₑₘ) von zwischen ungefähr 110 mm und 120 mm und einer Höhe (hₑₘ) von zwischen ungefähr 10 mm und 20 mm passt und, dass der Körper (110) wenigstens einen Kreisradiusabschnitt (rₑₘ) von zwischen ungefähr 55 mm und 60 mm aufweist,
- die hohle Aufnahme (102) im Wesentlichen kegelstumpfförmig ist, mit einem variablen Innendurchmesser (r_{int-lc}) von zwischen ungefähr 5 mm und 15 mm und einer Höhe (h_{lc}) von zwischen ungefähr 100 mm und 150 mm, und aus einer Seitenwand der Dicke (e_{lc}) von zwischen 1 mm und 3 mm gebildet ist,
- die Abdeckungsstruktur (200) wenigstens teilweise mit einem Konus der Höhe (hₛᵣ) von zwischen ungefähr 50 mm und 70 mm und wenigstens teilweise mit einem Ring (eₛᵣ) in Verbindung steht, dessen Dicke gewählt ist, um die Zelle oder die Zellen mit einem Radius (rₐ) von zwischen 8 mm und 15 mm aufzunehmen,
- die Kegelstumpfaufnahme einen variablen Radius (rₐ) von zwischen ungefähr 30 mm und 45 mm aufweist, und
- der Anschlag (106) im Wesentlichen von eiförmiger Gestalt ist, mit der Länge (L_{b}) von ungefähr 30 mm, einer Breite (l_{b}) von zwischen ungefähr 8 mm und 9 mm und einer Höhe (h_{b}) von zwischen ungefähr 12 und 16 mm.
